# EUROPÄISCHE PATENTSCHRIFT

(11) **EP 0 709 414 B1**
(45) Veröffentlichungstag und Bekanntmachung des Hinweises auf die Patenterteilung: **02.06.1999**
(21) Anmeldenummer: 95116852.5
(22) Anmeldetag: 26.10.1995
(51) Int. Cl.: C08G 18/36, C08G 18/66, C08G 18/08, C09D 175/04

(54) **Verwendung von partiell dehydratisierten Rizinusölen zur Herstellung von wässrigen Polyurethandispersionen sowie unter Verwendung dieser wässrigen Polyurethandispersionen hergestellte Beschichtungen**
Use of partially dehydrated castor oils for the preparation of aqueous polyurethane dispersions and coatings prepared by use of these aqueous polyurethane disperions
Utilisation d'huiles de ricin partiellement déshydratées pour la préparation de dispersions aqueuses de plyuréthane et revêtements préparés en utilisant ces dispersions aqueuses de polyuréthane

(30) Priorität: 27.10.1994 DE 4438351
(43) Veröffentlichungstag der Anmeldung: 01.05.1996
(73) Patentinhaber: Alberdingk Boley GmbH, 47829 Krefeld (DE)
(72) Erfinder: Leinz, Gerhard, D-47802 Krefeld (DE); Heussen, Ingrid, D-47802 Krefeld (DE); Allmüller, Robert, D-47803 Krefeld (DE)
(74) Vertreter: Klöpsch, Gerald, Dr.-Ing. Patentanwalt

(56) Entgegenhaltungen:
- FR-A- 883 646
- FR-A- 2 030 803
- DATABASE WPI Week 8519 Derwent Publications Ltd., London, GB; AN 85112782 & JP-A-60 053 522 (ITO SEIYU KK) , 27.März 1985

## Beschreibung

Die Erfindung betrifft die Verwendung von partiell dehydratisierten Rizinusölen als Polyolkomponente zur Herstellung von wäßrigen Polyurethandispersionen sowie unter Verwendung dieser Polyurethandispersionen hergestellten Beschichtungen. Das partiell dehydratisierte Rizinusöl kann dabei alleinige Polyolkomponente sein oder andere Polyolkomponenten zu einem erheblichen Prozentsatz ersetzen.

Rizinusöl ist ein ökologisch vorteilhafter, da nachwachsender Rohstoff, der für die verschiedensten Einsatzzwecke verwendet wird, z. B. für Gießmassen, Kleber oder antikorrosive Polyurethanüberzugszusammensetzungen gemäß DE-OS 35 04 228 ebenso wie für massive Polyurethanwerkstoffe in medizinischen Geräten gemäß GB-PS 2 021130. Ferner sind auch bereits Polyoxyalkylether auf der Basis von Rizinusöl für die Herstellung von Polyurethanen aus der DE-PS 33 23 880 bekannt.

Der Einsatz von partiell dehydratisierten Rizinusölen ist auch schon für die Verwendung in lösungsmittelfreien Klebersystemen gemäß DE-OS 41 14 022 beschrieben worden.

Aufgabe der Erfindung war es, wäßrige Polyurethandispersionen bereitzustellen, die als Polyolkomponente geeignete, auf relativ einfachem Wege herstellbare Rizinusölfolgeprodukte enthalten und aus den so erhaltenen wäßrigen Polyurethandispersionen Beschichtungen und Überzüge bereitzustellen, die neben der Schutzfunktion dem Anforderungsprofil eines wäßrigen Beschichtungssystems wie hoher Glanz, gute Haftung und Elastizität gerecht werden.

Überraschenderweise hat sich gezeigt, daß partiell dehydratisiertes Rizinusöl
1. eine überproportionale Erniedrigung der Präpolymerviskosität bei der Herstellung der wäßrigen Polyurethandispersionen bewirkt, was dazu führt, daß auf wenigstens einen Teil des zur Viskositätserniedrigung eingesetzten Lösungsmittels verzichtet werden kann,
2. daß sich die mechanischen Kenngrößen und der Glanz des aus solchen Polyurethandispersionen hergestellten Films durch die Verwendung des partiell dehydratisierten Rizinusöls nicht nachteilig verändern,
3. daß die Filme aus solchen wäßrigen Polyurethandispersionen hergestellter Lacküberzüge elastisch sind.

Die Aufgabe der Erfindung wird durch die Verwendung von partiell dehydratisiertem Rizinusöl mit einer Hydroxylzahl von 90 bis 130 als Bestandteil einer Polyolmischung für die Herstellung von wäßrigen Polyurethandispersionen und Beschichtungen hieraus gelöst.

Das erfindungsgemäß verwendete, partiell dehydratisierte Rizinusöl kann insgesamt als Polyolkomponente dienen, also 100 % des eingesetzten Polyols darstellen, es kann aber auch nur einen Teil der Polyolmischung ausmachen, wobei bevorzugt das erfindungsgemäß eingesetzte, partiell dehydratisierte Rizinusöl 25 - 100 Gew.-% der Polyolmischung ausmacht. Neben dem erfindungsgemäß eingesetzten, partiell dehydratisierten Rizinusöl können sämtliche anderen, für die Herstellung von vorzugsweise wäßrigen Polyurethandispersionen eingesetzten Polyole verwendet werden. Bevorzugt weist das erfindungsgemäß verwendete, partiell dehydratisierte Rizinusöl eine Hydroxylzahl von 100 - 125 mg KOH/g und besonders bevorzugt von 110 - 120 mg KOH/g auf.

Die erfindungsgemäß verwendeten, partiell dehydratisierten Rizinusöle werden nach allgemein bekannten Verfahren durch Dehydratisierung von Rizinusöl in Gegenwart von sauren Katalysatoren wie Schwefelsäure, Phosphorsäure, Säureanydriden und/oder sauer reagierenden Metalloxiden hergestellt ("Farbe und Lack", 57, 149, 1951 und "Fette und Seifen", Heft 9, 425, 1943).

Die Herstellung der wäßrigen Polyurethandispersion erfolgt nach an sich bekannten Verfahren,
wie in der US-PS 4,335,029 beschrieben , die durch Verweis in die vorliegende Anmeldung aufgenommen wird.

Üblicherweise wird zunächst ein NCO - terminiertes Präpolymer durch Umsetzung von bisfunktionellen Alkoholen mit Diisocyanaten hergestellt. Als bisfunktionelle Alkohole sind technisch in erster Linie Polyester - und/oder Polyetherdiole und/oder Polyester/Polyetherdiole geeignet. Durch Kettenverlängerung, z. B. mit Diaminen, werden dann die Polyurethane erhalten. Polyurethandispersionen , die in Wasser selbstemulgierend sind , werden durch Einbau hydrophiler - Gruppen z. B. anionischer Carboxy- oder Sulfonsäuregruppen oder auch kationischer Gruppen in das Molekül erhalten . Polyurethane werden im Regelfall aus Viskositätsgründen in inerten organischen Lösemitteln hergestellt.

Das erfindungsgemäß eingesetzte, partiell dehydratisierte Rizinusöl kann sowohl in Mischung mit einem Polyester-Polyol als auch mit einem Polyether-Polyol oder einer Mischung aus Polyester-Polyol und Polyether-Polyol oder Mischpolyolen auf Basis von Polyestern und Polyethem eingesetzt werden.

Dabei liegt der Molekulargewichtsbereich in Abhängigkeit von der Zusammensetzung des Polyols bevorzugt im Bereich von 400 bis 3000, bei reinen Polyetherpolyolen bevorzugt im Bereich von etwa 1000 bis 2000, bei Polyester-Polyolen bei etwa 1000 - 3000, ebenso bei gemischten Polyether/Polyester-Polyolen. Derartige Polyester- und Polyether-Polyole sind unter verschiedenen Handelsnamen erhältlich, z.B. die Polyether -Polyole als Propoxylierungsprodukte von Neopentylglykol o. ä. Diolen unter der Bezeichnung von Voranol ( Hersteller DOW).
Wenn im Text Polyester -Polyol angegeben ist, sind darin sowohl Carbonsäureester als auch Kohlensäureester eingeschlossen .

Unter die erfindungsgemäßen Überzüge fallen in erster Linie Holzbeschichtungen sowie Überzüge für Kunstoff, Metall, Glas, Leder, Textilien, Papier, Beton und sonstige mineralische Untergründe.

Die Erfindung wird durch die nachfolgenden Beispiele näher erläutert:

### Beispiel 1

### Präpolymerherstellung mit der Polyester - Polyol - Kombination 50 : 50

In einem Glaskolben ausgerüstet mit Rührer, Thermometer, Rückflußkühler und Stickstoffüberleitung wurden 76,8 g eines Polyesters auf Basis Hexandiol und Adipinsäure mit einer Hydroxylzahl von 72 mg KOH/g bis 76 mg KOH/g (Handelsname : Formrez F 330 - 35 der Fa. Baxenden Chemicals ) und 76,8 g des partiell dehydratisierten Rizinusöls mit einer Hydroxylzahl von 100 mg KOH/g bis 125 mg KOH/g vorgelegt.
Zu dieser Einwaage wurden 1,71 g eines Antoxidationsmittels und 0,86 g eines UV-Absorbers und 7,57 g Melamin zugegeben. Anschließend wurde über einen Tropftrichter 160,7 g 4,4'-Dicyclohexylmethan-diisocyanat (Handelsname.Desmodur W der Fa. Bayer AG )und im Anschluß daran 77,1 g N-Methylpyrrolidon (Fa. ISP )zugetropft. Die gesamte Einwaage wurde nun bei 110 °C unter N₂ Überleitung verrührt und bis zu einem NCO-Gehalt von ≤ 9,2 % umgesetzt. Die Reaktion wurde acidimetrisch verfolgt.

Nach Erreichen des NCO-Gehalts wurde das gebildete Oligomer auf ca. 50 °C abgekühlt und 21,7 g Dimethylolpropionsäure, 77,1 g N-Methylpyrrolidon und 16,3 g Triethylamin zugegeben.
Bei 55 °C wurde dann in dieser zweiten Stufe bis zum NCO-Gehalt von 4,2 % - 4,6 % polyaddiert. Die Umsatzkontrolle wurde acidimetrisch durchgeführt.

### Dispergierung:

Nach dem Ende der Polyaddition wurde das NCO-terminierte Oligomer unter heftigem Rühren in 530 g demineralisiertem Wasser dispergiert. Die Molekulargewichtserhöhung wurde mit 22,3 g einer 33%igen wäßrigen Ethylendiaminlösung und durch Zugabe von 23,7 g Adipinsäuredihydrazid durchgeführt.
Eine Stunde nach beendeter Zugabe der Kettenverlängerungsmittel wurde der Dispersion 15,4 g 30%ige Formalinlösung zugesetzt.

Es wurde eine transparente Dispersion mit folgenden Kenndaten erhalten:

| | |
|---|---|
| Viskosität | 30 mPas |
| pH-Wert | 7,5 |
| Festkörpergehalt | 33,0 % |

### Beispiel 2

### Präpolymerherstellung mit der Polyester - Polyol - Kombination 75 : 25

Es wurde nach dem gleichen Verfahren wie in Beispiel 1 beschrieben gearbeitet, jedoch mit der folgenden Polyoleinwaage:
118,2 g eines Polyesters auf Basis Hexandiol/Adipinsäure mit einer Hydroxylzahl von 72 - 76 mg KOH/g Substanz (Handelsname Formrez F 330-35 der Fa. Baxenden Chemicals ) und 39,5 g eines partiell dehydratisierten Rizinusöls mit einer Hydroxylzahl von 110 - 130 mg KOH/g Substanz. Bei konstantem NCO/OH-Verhältnis änderte sich die Desmodur W (4, 4'-Dicyclohexyldiisocyanat der Fa. Bayer AG ) Einwaage auf 156,6 g. Alle anderen Reaktanten und Zuschlagstoffe wurden wie in Beispiel 1 aufgeführt zugesetzt.
Die Polyaddition, Dispergierung und Kettenverlängerung geschah in gleicher Art und Weise.

Es wurde eine transparente Dispersion mit folgenden Kennzahlen erhalten.

| | |
|---|---|
| Viskosität | 25 mPas |
| pH-Wert | 7,5 |
| Festkörpergehalt | 31,7 % |

### Beispiel 3

### Präpolymerherstellung mit der Polyester - Polyol - Kombination 25 : 75

Es wurde nach dem gleichen Verfahren wie in Beispiel 1 beschrieben gearbeitet, jedoch mit der folgenden Polyoleinwaage:
37,4 g eines Polyesters auf Basis Hexandiol/Adipinsäure mit einer Hydroxylzahl von 72 - 76 mg KOH/g Substanz und 112,2 g eines partiell dehydratisierten Rizinusöls mit einer Hydroxylzahl von 110 - 130 mg KOH/g Substanz. Bei konstantem NCO/OH-Verhältnis änderte sich die Desmodur W Einwaage auf 164,6 g. Alle anderen Reaktanten und Zuschlagstoffe wurden wie in Beispiel 1 aufgeführt zugesetzt.
Die Polyaddition, Dispergierung und Kettenverlängerung geschah in gleicher Art und Weise.

Es wurde eine transparente Dispersion mit folgenden Kennzahlen erhalten.

| | |
|---|---|
| Viskosität | 30 mPas |
| pH-Wert | 7,5 |
| Festkörpergehalt | 31,8 % |

### Beispiel 4 : Standard

### Präpolymerherstellung mit 100 % Polyester (PES - Standard)

Es wurde nach dem gleichen Verfahren wie in Beispiel 1 beschrieben gearbeitet, jedoch wurden hier 164 g des Polyesters auf Basis Hexandiol/Adipinsäure und 152,6 g Desmodur W eingesetzt.
Alle anderen Reaktanten und Zuschlagstoffe wurden wie in Beispiel 1 aufgeführt zugesetzt.

Es wurde eine transparente Dispersion mit folgenden Kenndaten erhalten.

| | |
|---|---|
| Viskosität | 41 mPas |
| pH-Wert | 7,9 |
| Festkörpergehalt | 30,0% |

### Beispiel 5

### Präpolymerherstellung mit Polyether - Polyol - Kombination 50 : 50

Es wurden 131,25 g eines Polypropylenglykols ( Voranol P 1010 der Fa DOW ) mit einem mittleren MW = 1000 und 131,25 g des partiell dehydratisierten Rizinusöls und 22,5 g Dimethylolpropionsäure eingewogen . Unter Rühren und Stickstoffüberleitung wurden 215,0 g Isophorondiisocyanat
der Fa. HÜLS AG zugetropft .
Anschließend wurde die gesamte Einwaage bei 70 °C verrührt und der Umsatz acidimetrisch kontolliert. Bei Erreichen eines NCO - Gehaltes von ≦ 8,9 % wurde das Präpolymer mit 16,46 g Triethylamin ( BASF ) neutralisiert.
Es schloß sich die Dispergierung an .

### Dispergierung:

Nach dem Ende der Polyaddition wurde das NCO-terminierte Oligomer unter heftigem Rühren in 580 g demineralisiertem Wasser dispergiert. Die Molekulargewichtserhöhung wurde mit 59,94 g einer 15%igen wäßrigen Hydrazinlösung durchgeführt.

Es wurde eine opake Dispersion mit folgenden Kenndaten erhalten:

| | |
|---|---|
| Viskosität | 35 mPas |
| pH-Wert | 7,1 |
| Festkörpergehalt | 38,7 % |

### Beispiel 6

### Präpolymerherstellung mit der Polyester - Polyether - PD-ÖL - Kombination 1 : 1 : 1

In einem Glaskolben ausgerüstet mit Rührer, Thermometer, Rückflußkühler und Stickstoffüberleitung wurden 52,75 g eines Polyesters auf Basis Hexandiol und Adipinsäure mit einer Hydroxylzahl von 110 mg KOH/g (Handelsname : Formrez V 66-112 )der Fa. Baxenden Chemicals ) und 52,75 g des partiell dehydratisierten Rizinusöls mit einer Hydroxylzahl von 100 mg KOH/g bis 125 mg KOH/g und 52,75 g Voranol P 1010 der Fa DOW vorgelegt.
Zu dieser Einwaage wurden 1,71 g eines Antoxidationsmittels und 0,86 g eines UV-Absorbers und 7,57 g Melamin zugegeben. Anschließend wurde über einen Tropftrichter 155,9 g 4 , 4 ' - Dicyclohexylmethan - diisocyanat (Handelsname Desmodur W der Fa. Bayer AG )und im Anschluß daran 77,1 g N-Methylpyrrolidon (Fa. ISP )zugetropft. Die gesamte Einwaage wurde nun bei 110 °C unter N₂ Überleitung verrührt und bis zu einem NCO-Gehalt von ≦ 9,2 % umgesetzt. Die Reaktion wurde acidimetrisch verfolgt.

Nach Erreichen des NCO-Gehalts wurde das gebildete Oligomer auf ca. 50 °C abgekühlt und 21,7 g Dimethylolpropionsäure, 77,1 g N-Methylpyrrolidon und 16,3 g Triethylamin zugegeben.
Bei 55 °C wurde dann in dieser zweiten Stufe bis zum NCO-Gehalt von 4,0% - 4,5 % polyaddiert. Die Umsatzkontrolle wurde acidimetrisch durchgeführt.

Die Dispergierung und Kettenverlängerung wurde wie in Beispiel 1 beschrieben durchgeführt.

Es wurde eine transparente Dispersion mit folgenden Kenndaten erhalten:

| | |
|---|---|
| Viskosität | 55 mPas |
| pH-Wert | 7,8 |
| Festkörpergehalt | 32,3 % |

### Beispiel 7

### Präpolymerherstellung mit 100 % Polyether (PET - Standard.)

Es wurden 99,2 g eines Polypropylenglykols ( Voranol P 1010 der Fa DOW ) und 16,9 g Dimethylolpropionsäure eingewogen . Unter Rühren und Stickstoffüberleitung wurden 160,3 g Isophorondiisocyanat der Fa. HÜLS AG zugetropft.

Anschließend wurde die gesamte Einwaage bei 70 °C verrührt und der Umsatz acidimetrisch kontrolliert. Bei Erreichen eines NCO - Gehaltes von ≤ 8,9 % wurde das Präpolymer mit 12,7 g Triethylamin ( BASF ) neutralisiert.
Es schloß sich die Dispergierung an .

### Dispergierung:

Nach dem Ende der Polyaddition wurde das NCO-terminierte Oligomer unter heftigem Rühren in 490 g demineralisiertem Wasser dispergiert. Die Molekulargewichtserhöhung wurde mit 70,7 g einer 15%igen wäßrigen Hydrazinlösung durchgeführt.

Es wurde eine opake Dispersion mit folgenden Kenndaten erhalten:

| | |
|---|---|
| Viskosität | 65 mPas |
| pH-Wert | 7,4 |
| Festkörpergehalt | 38,7 % |

Die folgende Aufstellung erläutert die Zuordnung der Beispiele zu den Versuchsbezeichnungen bzw Versuchsnummern. Die Prozentangaben des Polyol - Anteils bzw. dem Anteil an partiell dehydratisiertem Rizinusöl ( nachfolgend PD-ÖL genannt ) sind auf 100 % Polyolanteile bezogen .

| **Beispiel** | **Versuchs. Bezeichn.bzw. Nr.** | **Anteil % Polyester** | **Anteil % PD - ÖL** | **Anteil % Polyether** |
|---|---|---|---|---|
| Beisp. 1 | 3 | 50 | 50 | |
| Beisp. 2 | 2 | 75 | 25 | |
| Beisp. 3 | 4 | 25 | 75 | |
| Beisp. 4 | PES - Standard | 100 | | |
| Beisp. 5 | 5 | | 50 | 50 |
| Beisp. 6 | 6 | 33,3 | 33,3 | 33.3 |
| Beisp. 7 | PET - Standard | | | 100 |

Die so erhaltenen Dispersionen wurden mittels bekannter Testmethoden ( s. Erläuterungen im Anschluß an die Tabelle 1) auf ihre mechanischen Eigenschaften untersucht.
Die Ergebnisse sind in Tabelle 1 aufgeführt.

**Tabelle 1**

| Vers.- Nr | PD-ÖL | Polyester | Polyether | Pendelhärte | Dehnung | Zugfestigkeit |
|---|---|---|---|---|---|---|
| | | | | in Sek. | in % | N/mm ² |
| PES - Standard | - | 100 % | | 130 | ca.100 | 28 |
| Vers. 2 | 25 % | 75 % | | 109 | 307 | 29,5 |
| Vers. 3 | 50 % | 50 % | | 103 | 220 | 20,5 |
| Vers. 4 | 75 % | 25 % | | 104 | 178 | 22,3 |
| PET - Standard | | | 100 % | 45 | ca. 400 | 20 |
| Vers. 5 | 50 % | | 50 % | 63 | ca. 200 | 17 |

### Erläuterung der Bestimmungsmethoden :

| | |
|---|---|
| Pendelhärte nach König | DIN 53 157 |
| Glanzmessung | DIN 67 530 |

Die mechan. Eigenschaften Dehnung und Zugfestigkeit wurden mit Hilfe einer Zugdehnungsapparatur der Fa. ZWICK durchgeführt. Die Werte sind dem entsprechende Zugdehnungsdiagramm entnommen.

Die Probenvorbereitung zur Prüfung der mechanischen Eigenschaften wird nachfolgend wiedergegeben .
Die Filme werden mit 300 µm auf Glas aufgezogen und 24 h bei Raumtemperatur und anschließend 2 h bei 70 °C getrocknet.
Die Filme werden in 1 cm breite Streifen geschnitten .
Trockenschichtstärke : 100 ±10 µm
Die Einspannlänge der Filmstreifen in der Zugdehnungsmaschine beträgt 3 cm.

Die Meßergebnisse zeigen, daß der naturgemäß weichmachende Anteil des partiell dehydratisierten Rizinusöls nur einen überraschend geringen Einfluß auf die mechanischen Eigenschaften hat. Die Härte nimmt nur vergleichsweise wenig ab, dagegen ist die Dehnung überraschend sehr hoch. Auch die Zugfestigkeit wird nicht nennenswert beeinträchtigt.
Bei der Polyether - Kombination mit PD-ÖL ist sogar eine nennenswerte Erhöhung der Härte festzustellen, wobei dann naturgemäß auch die Dehnung etwas nachläßt.

Aus den erhaltenen wäßrigen Polyurethandispersionen wurde eine Holzbeschichtung gemäß folgender standardisierter Prüfrezeptur hergestellt:

Die Versuche 2 bis 4 wurden in Vergleich zum Standard mit jeweils 88,2 g in der Prüfrezeptur eingesetzt.

| | |
|---|---|
| PU-Dispersion bzw. Bindemittel | 88,2 g |
| Cosolvent Butylglykol, BASF | 3,0 g |
| Verlaufsmittel Byk 346, Byk Chemie | 0,3 g |
| Entschäumer Tegofoamex 800, Tego Chemie | 0,8 g |
| Wachsdispersion Ultralub W 815 Surface Chemie | 4,0 g |
| Verdicker Rheolate 278, Kronos | 0,7 g |
| Wasser | 3,0 g |
| **Summe** | **100,0 g** |

Von allen hergestellten Dispersionen wurde nach dieser allgemeinen Formulierung ein Lack gefertigt und auf Holz mit Pinselauftrag aufgebracht. Die Prüfung erfolgte nach der bekannten Möbelspezifikation (DIN 68 861) eine Woche nach Lagerung bei Raumtemperatur.

Die Ergebnisse sind in Tabelle 2 aufgeführt:

**Tabelle 2**

| Versuchs-Nr. | Anteil PD - ÖL | Wasser | Ethanol | Prüfmittel Nr. 5 | Dibutylphthalat |
|---|---|---|---|---|---|
| Standard | 0 | 0 | 2-3 | 2-3 | 0 |
| Vers. 2 | 25 | 0 | 1-2 | 2-3 | 0 |
| Vers. 3 | 50 | 0 | 1-2 | 2-3 | 0 |
| Vers. 4 | 75 | 0 | 1-2 | 2-3 | 0 |

### Erläuterung zur Tabelle :

Die Prüfungen wurden wie in der DIN Vorschrift 68 861 beschrieben durchgeführt.
Das Prüfmittel Nr. 5 ist eine Reinigungslösung aus Wasser und Ethanol 1 : 1.
Beim Dibutylphthalat handelt es sich um einen häufig verwendeten Weichmacher.

Für die Beurteilung gilt :
0 = sehr gut 5 = sehr schlecht
Ein ebenfalls überraschendes Ergebnis wurde bei der Glanzmessung ( DIN 67 530 )festgestellt. Der Glanz blieb, selbst beim Einsatz von 75 % partiell dehydratisiertem Rizinusöl, überraschend konstant.
Die Werte sind in Tabelle 3 aufgeführt.

**Tabelle 3**

| Versuchsnr. | Glanzgrad 20° | Glanzgrad 60° | Glanzgrad 85° | Anteil an PD - ÖL |
|---|---|---|---|---|
| Standard | 83 | 92 | 99 | 0 % |
| Vers. 2 | 78 | 88 | 98 | 25 % |
| Vers. 3 | 79 | 89 | 100 | 50 % |
| Vers. 4 | 80 | 89 | 98 | 75 % |
| Vers. 5 | 68 | 87 | 93 | 50 % |
| PE - Standards | 65 | 86 | 93 | 100 % |

Für die Beschichtung von weiteren Substraten wurden weitere erfindungsgemäße wäßrige Polyurethandispersionen unterschiedlicher Härte, wie in den Beispielen beschrieben, hergestellt, indem das NCO : OH-Verhältnis variiert wurde. Die Kombination von Polyester (wie in Beispiel ...) und PD-Öl wurde dabei konstant gehalten und lag bei 50 % PD-Öl bzw. 50 % Polyester (1 : 1). In der folgenden Tabelle sind die Beispiele mit dem entsprechenden NCO : OH-Verhältnis bezeichnet. Die Vergleichsversuche wurden mit 100 % Polyesteranteil hergestellt (ohne PD-Öl) bei gleichem NCO : OH-Verhältnis wie in den Beispielen. Für Metall- und Kunststoffbeschichtungen wurde die folgende allgemeine Prüfrezeptur verwendet.

| | **Klarlack** | **Weißlack** |
|---|---|---|
| PU-Dispersion bzw. Bindemittel | 089,2 g | 089,2 g |
| Cosolvent 1 Butylglykol | 002,5 g | 002,5 g BASF |
| Cosolvent 2 Butyldiglykol | 002,5 g | 002,5 g BASF |
| Wasser | 005,0 g | 005,0 g |
| Verlaufsmittel Byk 346 | 000,3 g | 000,3 g Byk Chemie |
| Entschäumer Tegofoamex 800 | 000,5 g | 000,5 g Tego Chemie |
| Verdicker Rheolate | 000,15 g | 000,15 g Kronos |
| Pigmentpräparation Flexobrite weiß | | 025,0 g Yorkshire Farben |
| **Summe** | **100,15 g** | **125,15 g** |

Die beschriebenen Bindemittel wurden in Anlehnung an die DIN 53151 auf Haftung an verschiedenen Kunststoffen und Metall untersucht. Die Ergebnisse sind in Tabelle 4 aufgeführt.

**Tabelle 4**

| **Gitterschnitt (in Anlehnung an DIN 53151):** | | | | | |
|---|---|---|---|---|---|
| Untergrund/Lack aus | ABS | Polycarbonat | Polyamid | PVC | Weißblech |
| NCO/OH = 1,64 | 0 | 0 | 1 | 0 | 0 |
| Vergleich 100 % Polyester (0 % PD-Öl) | 1 - 2 | - | - | 1 - 2 | 5 |
| NCO/OH = 1,9 | 1 - 2 | 1 | 0 - 1 | 0 | 1 |
| Vergleich 100 % Polyester 0 % PD-Öl | - | - | - | 5 | 1 |

Die Werte zeigen, daß die Haftung an Metall und Kunststoffen gut ist, so daß sich diese Bindemittel auf der Basis wäßriger Polyurethandispersionen universell für eine Vielzahl von Untergründen einsetzen lassen.

Auch die Chemikalienbeständigkeit dieser Überzüge ist gut.
Um eine Aussage über die Chemikalienbeständigkeit der Überzüge bzw. Beschichtungen machen zu können wurden diese, wie schon bei den Holzbeschichtungen beschrieben, nach DIN 68861-1B geprüft.

Durch Ausschöpfung der üblichen Möglichkeiten, wie z. B. Veränderung des NCO : OH-Verhältnisses in der Rezeptur, lassen sich alle Anforderungen an solche Beschichtungssysteme im Vergleich zu den 100 % Polyester enthaltenden Systemen einfach einstellen.

## Patentansprüche

1. Verwendung von partiell dehydratisiertem Rizinusöl mit einer Hydroxylzahl von 90 - 130 mg KOH/g Substanz als alleinige Polyolkomponente oder als Bestandteil einer Polyolmischung für die Herstellung von wäßrigen Polyurethandispersionen und Beschichtungen hieraus.

2. Verwendung nach Anspruch 1, dadurch gekennzeichnet, daß partiell dehydratisiertes Rizinusöl mit einer Hydroxylzahl von 110 bis 125 mg KOH/g eingesetzt wird.

3. Verwendung nach Anspruch 1 oder 2, dadurch gekennzeichnet, daß das partiell dehydratisierte Rizinusöl 25 - 100 % der Polyolkomponente des Polyurethans ausmacht.

4. Verwendung nach einem der Ansprüche 1 bis 3, dadurch gekennzeichnet, daß das partiell dehydratisierte Rizinusöl Bestandteil einer Mischung mit einem Polyesterpolyol, einem Polyetherpolyol, einem Polyester-Polyether-Polyol oder einer Mischung aus einem Polyester-Polyol und Polyether-Polyol bildet, wobei das Molekulargewicht des Polyols im Bereich von etwa 400 bis 6000 liegt, das nach üblichen Methoden zu wäßrigen Polyurethandispersionen und daraus hergestellten Beschichtungen verarbeitet wird.

5. Verwendung nach Anspruch 4, dadurch gekennzeichnet, daß das Molekulargewicht bei Polyesterpolyolen bei etwa 1000 bis 3000 und bei Polyetherpolyolen bei etwa 1000 bis 2000 liegt.

6. Beschichtungen auf der Basis von wäßrigen Polyurethandispersionen, erhalten unter Verwendung von partiell dehydratisiertem Rizinusöl nach einem der Ansprüche 1 - 5, für Holz, Kunststoff, Metall, Glas, Leder, Textilien, Papier und Beton.

## Claims

1. The use of partially dehydrated castor oil having a hydroxyl number of 90 - 130 mg KOH/g of substance as the sole polyol component or as a component of a polyol mixture for the production of aqueous polyurethane dispersions and coatings thereof.

2. The use according to claim 1 characterized in that partially dehydrated castor oil having a hydroxyl number of 110 to 125 mg KOH/g is used.

3. The use according to claim 1 or 2 characterized in that the partially dehydrated castor oil makes up 25 - 100% of the polyol component of the polyurethane.

4. The use according to any one of claims 1 to 3 characterized in that the partially dehydrated castor oil forms a component of a mixture with a polyester polyol, a polyether polyol, a polyester-polyether-polyol, or of a mixture of a polyester polyol and a polyether polyol, with the molecular weight of the polyol being in the range of about 400 to 6,000, which is processed according to usual methods into aqueous polyurethane dispersions and coatings produced thereof.

5. The use according to claim 4 characterized in that the molecular weight is in the range of about 1,000 to 3,000 in case of polyester polyols, and in the range of about 1,000 to 2,000 in case of polyether polyols.

6. Coatings based on aqueous polyurethane dispersions, obtained by using partially dehydrated castor oil according to any one of claims 1 - 5, for wood, plastic material, metal, glass, leather, textiles, paper, and concrete.

## Revendications

1. Utilisation d'une huile de ricin partiellement déshydratée, d'un indice d'hydroxyle de 90 à 130 mg KOH/g de substance à titre de seul composant de polyol ou de constituant d'un mélange de polyols pour la préparation de dispersions aqueuses de polyuréthanne et la réalisation de revêtements à partir de celles-ci.

2. Utilisation suivant la revendication 1, caractérisée en ce que l'on met en oeuvre une huile de ricin partiellement déshydratée d'un indice d'hydroxyle de 110 à 125 mg KOH/g.

3. Utilisation suivant la revendication 1 ou 2, caractérisée en ce que l'huile de ricin partiellement déshydratée constitue de 25 à 100% du composant polyol du polyuréthanne.

4. Utilisation suivant l'une quelconque des revendications 1 à 3, caractérisée en ce que l'huile de ricin partiellement déshydratée forme un composant d'un mélange avec un polyesterpolyol, un polyétherpolyol, un polyester-polyéther-polyol ou d'un mélange d'un polyester-polyol et d'un polyéther-polyol, où le poids moléculaire du polyol varie dans la plage d'environ 400 à 6000, que l'on transforme selon des méthodes habituelles en dispersions aqueuses de polyuréthanne et en revêtements qui en sont préparés.

5. Utilisation suivant la revendication 4, caractérisée en ce que le poids moléculaire des polyesterpolyols varie d'environ 1000 à 3000 et celui des polyétherpolyols varie d'environ 1000 à 2000.

6. Revêtements à base de dispersions aqueuses de polyuréthanne, obtenus en recourant à l'emploi d'huile de ricin partiellement déshydratée suivant l'une quelconque des revendications 1 à 5, pour le bois, les matières plastiques, les métaux, le verre, le cuir, les matières textiles, le papier et le béton.
